# NEW EUROPEAN PATENT SPECIFICATION

(11) **EP 0 240 202 B2**
(45) Date of publication and mention of the opposition decision: **16.08.1995**
(45) Mention of the grant of the patent: 20.02.1991
(21) Application number: 87302284.2
(22) Date of filing: 17.03.1987
(51) Int. Cl.: B41J 2/21, H04N 1/40, G06K 15/10

(54) **Halftone image printing device**
Druckeinrichtung für Halbtonbilder
Dispositif d'impression pour image demi-teinte

(30) Priority: 31.03.1986 JP 72832/86
(43) Date of publication of application: 07.10.1987
(73) Proprietor: KABUSHIKI KAISHA TOSHIBA, Kawasaki-shi, Kanagawa-ken 210 (JP)
(72) Inventor: Kazuhiko, Higuchi c/o Patent Division, Minato-ku Tokyo 105 (JP); Shuzo, Hirahara c/o Patent Division, Minato-ku Tokyo 105 (JP); Kiyoshi, Yamada c/o Patent Division, Minato-ku Tokyo 105 (JP)
(74) Representative: Freed, Arthur Woolf

(56) References cited:
- DE-A- 3 312 273
- DE-A- 3 338 868
- DE-A- 3 415 775
- US-A- 3 742 129
- KLAUS KOCH: "Untersuchung der Wahrnehmbarkeit von Rasterungen bei digitaler Wiedergabe von Halbtonbildern", 1984, Technische Universität München

## Description

This invention relates to a halftone image printing device which depicts an image by use of dot matrices. More specifically, this invention relates to a halftone image printing device of the type wherein each picture element is composed of a predetermined number of dots, a multi-gradation image being printed by altering the coverage of the printing dots (black dots) according to the optical density (by so-called coverage modulation), when the picture element is being printed.

Using a coverage-modulation printing process such as this, the size of a dot is determined by one printing element of the print head; for example, a heating resistor, in the case of a thermal head. Accordingly, the more dots an element picture is composed of, the smoother the gradation becomes. Conversely, when the number of picture elements is decreased, the resolution of an image is reduced.

Among the prior art techniques of realizing both smooth gradation and high resolution is a thermal transfer printing apparatus disclosed in European Patent Application EP-A-0 190 901 filed by the present applicant on January 31, 1986. In this prior art, the heating-resistors are widely spaced, and the multi-level printing is performed, dot by dot, by controlling the amount of energy applied to the dots. The range of optical density, within which the densities represented by the picture elements fall, is segmented into sub-ranges. Different heating-resistors are assigned to each sub-range of density. The dots printed by the heating-resistors assigned to any sub-range of density forms a "dot pattern" of a specific shape. This pattern is a multi-level pattern. Some of these dot patterns have extremely low noise in specific density regions, and can therefore provide a high quality image. This implies that if the dot patterns of low noise are selectively used in a specific density regions, high-resolution image printing with very smooth gradation can be realized.

To use the effect of heat accumulation, however, the prior art frequently uses a dot pattern including dots successively arranged in the sub-scanning direction. Therefore, the dots having the highest optical density in the picture element are concentrated in a specific vertical scanning or column direction in the dot matrix. A dot at the highest optical density is referred to as an energy-concentrated dot, and is usually located at the center of the dot pattern. Since the picture elements are, of course, also arrayed in the horizontal direction, the energy-concentrated dots are arranged in both the horizontal and vertical directions, to thereby provide a lattice-like texture. This texture, particularly in the low optical density region, appears as a texture noise in the image, and produces visually unattractive effects.

DE-A-3338868 discloses a halftone image printing device in which an image is made up of a number of picture elements. Each picture element includes a predetermined number of dots combined into a specific matrix array. Each picture element is printed in a dot pattern consisting of specific dots of those in the dot matrix. Dot pattern and the amount of energy to print a dot or dots of the dot pattern are controlled according to the optical density levels of the picture element.

Accordingly, an object of the present invention is to provide a halftone image printing device which is free from texture noise and its concomitant visually unattractive effects, caused by the energy-concentrated dots in the dot pattern in each picture element.

According to the present invention, there is provided a halftone image printing device in which one image is made up of a number of picture elements, each picture element including a predetermined number of dots combined into a specific matrix array, each picture element is printed in a dot pattern consisting of specific dots of those in the dot matrix, and a dot pattern and an amount of energy to print a dot or dots of the dot pattern are controlled according to optical density levels of the picture element, and having one dot row which contains at least one energy-concentrated dot, said at least one energy-concentrated dot being arranged to be supplied with concentrated printing energy but not a lower energy and two dot rows which are adjacent to that energy-concentrated dot-containing row, both also containing energy-concentrated dots arranged only to be applied with concentrated printing energy, the energy-concentrated dots of said respective rows being arrayed in different dot columns, wherein dots of the dot pattern other than the energy-concentrated dots are arranged only to be applied with lower printing energy.

In the device according to the invention, the energy-concentrated dots are arrayed in an oblique direction. Hence, a texture formed by these dots consists of oblique lines. Since the human eye is far less sensitive to oblique lines than to horizontal and vertical lines, this texture does not make the image as unattractive as a lattice-like texture does.

This invention can be more fully understood from the following detailed description when taken in conjunction with the accompanying drawings, in which:
Fig. 1 is a view illustrating an array of picture elements, which is used in a first embodiment of a halftone image printing device according to the present ivention;
Fig. 2 shows a graph illustrating the relationship between dot patterns and optical density;
Fig. 3 shows a table illustrating multi-level dot patterns and graduation levels;
Figs. 4A through 4C show matrix patterns formed when different dot patterns are successively printed;
Fig. 5 is a block diagram showing an arrangement of the halftone image printing device according to a first embodiment of the present invention;
Fig. 6 is a view illustrating the sampling operation of the halftone signal processing circuit of Fig. 5;
Fig. 7 is a view illustrating an array of picture elements and an array of dots in each picture element, which are used in a second embodiment of a halftone image printing device according to the present invention ;
Fig. 8A shows a matrix pattern of picture elements, which is used in a third embodiment of a halftone image printing device according to the present invention ;
Fig. 8B shows dot patterns for four optical densities, which are used in the third embodiment of the present invention ;
Fig. 9A shows a matrix pattern of picture elements, which is used in a fourth embodiment of a halftone image printing device according to the present invention ;
Fig. 9B shows dot patterns for three optical densities which are used in the fourth embodiment of the present invention ;
Fig. 10A shows a matrix pattern of picture elements, which is used in a fifth embodiment of a halftone image printing device according to the present invention ; and
Fig. 10B shows dot patterns for four optical densities, which are used in the fifth embodiment.

Embodiments of a halftone image printing device according to the present invention will now de described, with reference to the accompanying drawings.

In the first embodiment, an image consists of picture elements each made up of a dot matrix, which are arrayed in a zig-zag pattern, as is shown in Fig. l. As can be seen, each picture element row is out of line, by one-half of a picture element, with the adjacent element row. Each picture element is composed of a 2 (column) x 3 (row) rectangular matrix, with one dot added to the top and bottom of the rectangle, to thereby form an 8-dot dot matrix. In this specification, this dot matrix is defined as a quasi-diamond-shaped dot matrix of 2√2 x 2√2 = 8. In printing picture elements, only the specifically required dots in this 8-dot matrix will be black, the remaining dots staying white. In this specification, the term "dot pattern" will refer to this black dot pattern.

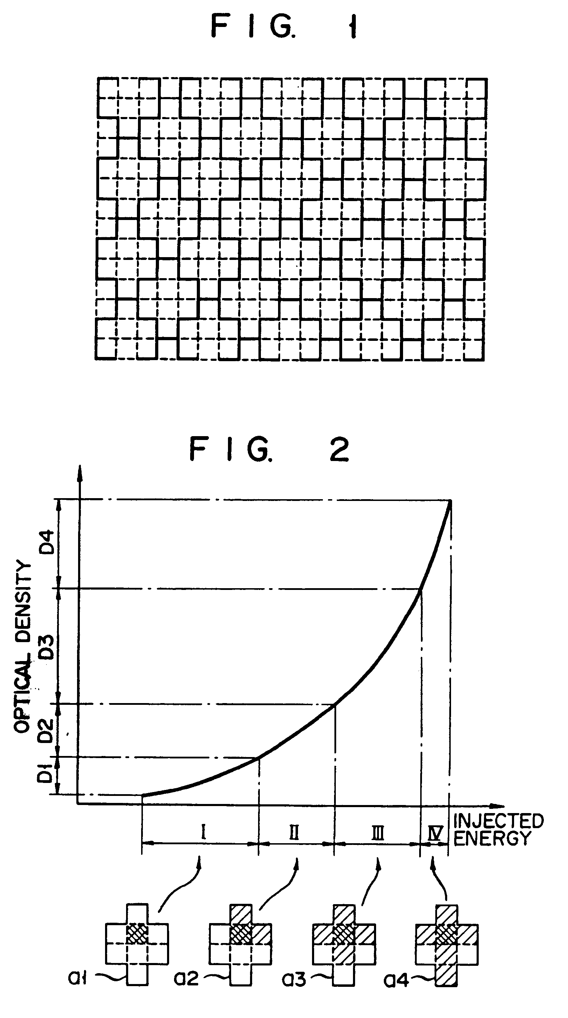

In this embodiment, the optical density range represented by the ordinate in the graph of Fig. 2 is divided into four small density regions D1 through D4. The injected energy represented by the abscissa is segmented into four sections I to IV. Dot patterns a1 to a4 are assigned to sections I to IV, as is shown in Fig. 2. Specifically, the abscissa or horizontal axis represents the total amount of energy to be injected into the heat resistors for printing one picture element. The ordinate or vertical axis represents the optical density of one picture element. The printing energy of each dot in each dot pattern is controlled in a multi-level fashion, according to the optical density. The multi-level dot pattern is used for printing one picture element The size of the printing dot varies in proportion to the amount of injected energy. Therefore, in order to allow room for larger dots, the space between the heating dots is set broad. When this embodiment is applied to thermal transfer printing, the amount of injected energy is determined by the drive pulse width or the drive pulse amplitude (voltage), or a combination of both, of the thermal head.

In Fig. 2, a1 represents a dot pattern containing one dot printed on the upper central part of the rectangular matrix. Pattern a2 contains three dots forming an L-shaped pattern, the first dot printed on the upper-central part of the matrix, the second dot printed above the first dot, and the third dot printed to the right of the first dot. Pattern a3 consists of five dots forming a cross, the first dot printed on the upper-central part of the matrix, the second dot printed above the first dot, the third dot printed to the right of the first dot, the fourth dot printed below the first dot, and the fifth dot printed to the left of the first dot. Pattern a4 uses one additional dot at the bottom of pattern a3. Of the dots shown in patterns a1 through a4, the energy-concentrated dot having the highest density (indicated by slanted lines going in both directions) is the dot included in pattern a1. It should be noted that even though the dot pattern changes, the position of this energy-concentrated dot remains constant.

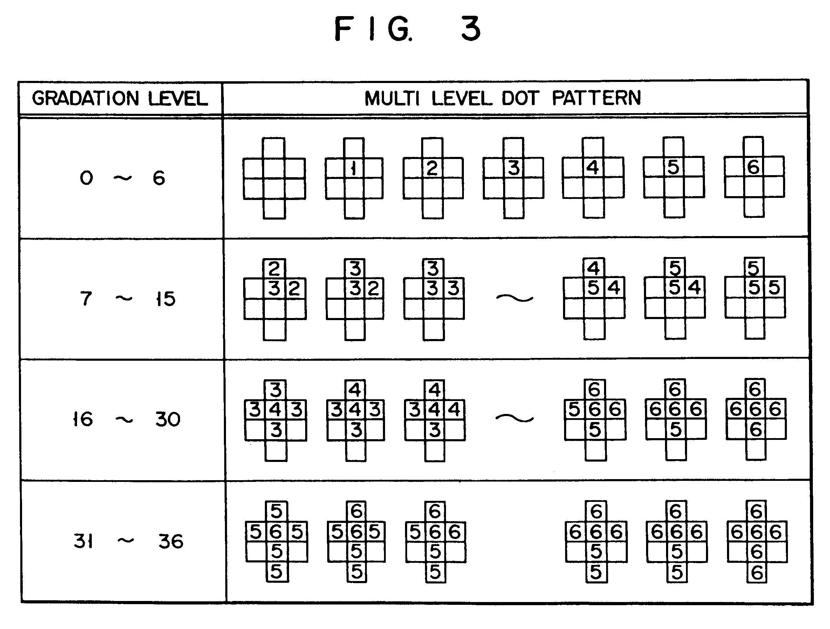

An example of 36 gradation levels, by using the 4 types of multi-level patterns is shown in Fig. 3. In first density region, D1 (gradation levels 0 to 6), the injected energy of the one printing dot of pattern a1 is varied from 0 to 6. In second density region, D2 (gradation levels 7 to 15), the total injected energy of the three printing dots of pattern a2 is varied from 7 to 15. In the third density region, D3 (gradation levels 16 to 30), the total injected energy of the 5 printing dots of pattern a3 is varied from 16 to 30. In the fourth density region, D4 (gradation levels 31 to 36), the total injected energy of the six printing dots of pattern a4 is varied from 31 to 36.

In the above manner, a density gradation of 36 steps can be defined by the picture elements each made up of a quasi-diamond-shaped dot matrix of 2√2 x 2√2 (= 8) dots.

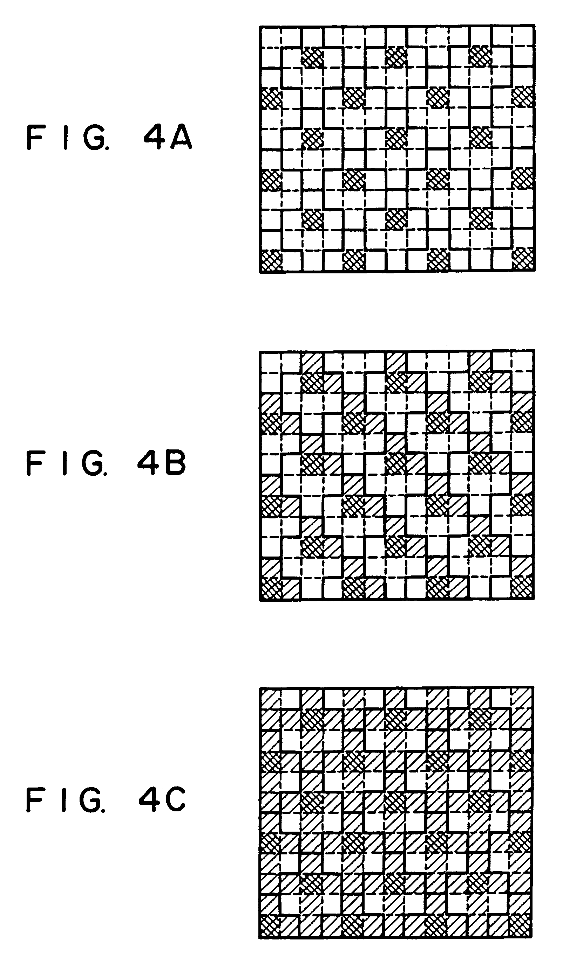

Fig. 4A shows a dot matrix formed when dot pattern a1 is printed repeatedly. Since the picture element is not rectangular, but quasi-diamond-shaped, each picture element row is out of line with the adjacent row, by on-half of a picture element. Therefore, the energy concentrated dots, as indicated by crossed oblique lines (in this case the dot pattern contains a single dot), are located at different vertical positions in the adjacent two rows of the picture element matrix. The energy-concentrated dots are arrayed not in both the horizontal and vertical directions, but in the diagonal directions. As a result, a lattice-like texture noise is never formed to make the image unattractive to the human eye.

Fig. 4B shows a dot matrix formed when dot patterns a2 are printed repeatedly. As can be seen from this matrix pattern, the printing dots as shaded by lines slanting down from the right to left, are aligned in the diagonal directions. The printing dots are aligned vertically at some points, but the energy-concentrated dots are arrayed in staggered fashion, as in the case of Fig. 4A. The printed image is rendered less unattractive.

Fig. 4C shows a dot matrix as it appears when dot patterns a4 are printed repeatedly. The printing dots are continuously aligned in both the horizontal and vertical directions, to form a lattice-like configuration. However, the energy-concentrated dots are arrayed in staggered fashion, as in the case of Fig. 4A, and blank spaces are arrayed in a uniform pattern. There fore, the problem of printing unattractive images is solved. The dot patterns a4 of adjacent picture elements are interconnected by the connecting parts formed, with the result that dot pattern a4 is equivalent to a dot pattern which consists of 3 dots of those of a 2 × 2 square dot matrix. Even though the picture element is a quasidiamond-shaped dot matrix of 2√2 × 2√2, it has the size of the 2 × 2 matrix in the high-density region, to apparently improve the resolution. In this high-density region, the printing dots are successively arrayed and form a lattice pattern. However, this is not problematic, because according to the visibility characteristic of the human eye, a distinguishable gradation level is low in the high density region.

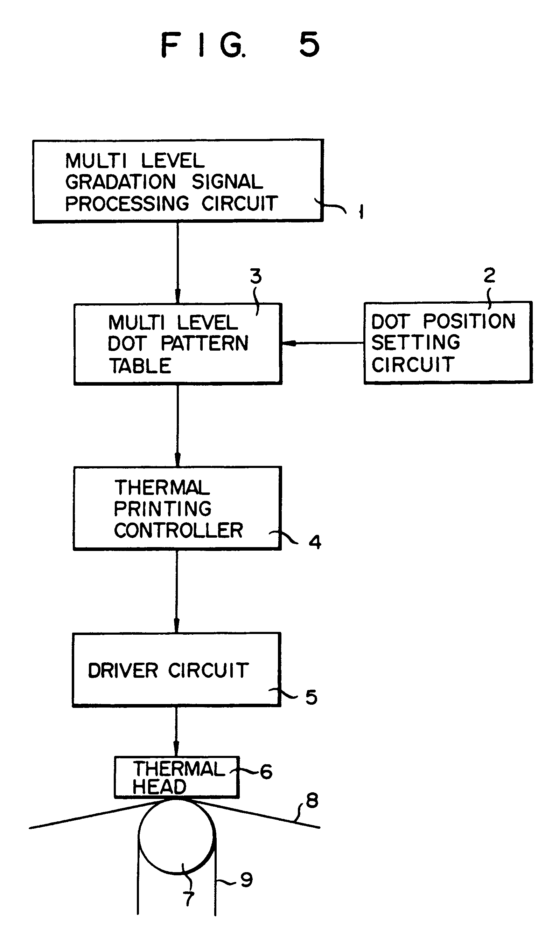

The scheme of a thermal printer designed on the basis of the principle as mentioned above will be described referring to Fig. 5. The output signals from multi-level gradation signal processing circuit 1 and dot position setting circuit 2 are applied to multilevel dot pattern table 3. The output signal of multilevel dot pattern table 3 is fed to driver circuit 5 via thermal printing controller 4. Thermal head 6 thermally melts the ink of ink ribbon 8 and transfers it onto paper 9, while making pressure contact with paper 9 via ink ribbon 8.

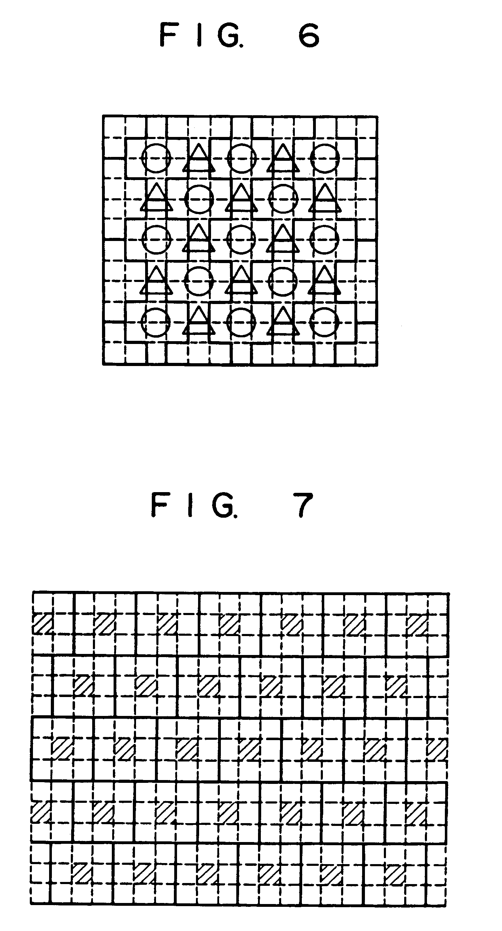

Multi-level gradation signal processing circuit 1 appropriately processes the halftone image signal so as to match the printer. The halftone image signal is derived from, for example, the scanner and the image memory, or comes from external devices through the transmission system. The image scanner optically scans the original picture to read out the picture information, and A/D converts the signal representing the picture information. The image memory stores the image signal for each picture element. More specifically, in case that each picture element contained in the signal input to multi-level gradation signal processing circuit 1 is composed of a 2 × 2 square dot matrix, as indicated by "○" and "△" symbols in Fig. 6, each picture element must be matched with the picture element size (2√2 × 2√2), the picture element configuration (quasidiamond-shaped) and the picture element array of the printer. To this end, of those components of the input signal, the signal component representative of only the picture elements as indicated by circles "○" is sampled. Further, the averaging or interpolating processing is applied to the signal of a "○ "picture element, in connection with the signal levels of the picture elements located near that "○" picture element. Multi-level gradation signal processing circuit 1 executes such processing.

Dot position setting circuit 2 is provided for digital printing or halftone printing, and sets dot positions in the dot matrix of each picture element. In the line printer, this circuit 2 operates in synchronism with the dot counter for the horizontal scanning and the line counter for the vertical scanning. If necessary, it operates at the same clock timing as that for the image signal inputting in the multi-level gradation signal processing circuit 1, to sample the signal in order to modify the picture element array and the picture element configuration, as described above.

Multi-level dot pattern table 3 is a key component of this embodiment; it stores dot patterns for gradation levels, as shown in Fig. 3, and the amounts of energy injected to the dots in the dot pattern, i.e., table 3 stores multi-level dot patterns. A ROM, for example, is used for this table. This table 3 produces the injected energy data of the dot, which is contained in the dot pattern of the gradation level indicated by the signal from multi-level gradation signal processing circuit 1, and is located at the position asset by dot position setting circuit 2.

Thermal printing controller 4, coupled with driver circuit 5, controls the width and amplitude of the pulse for each dot, which is applied to the thermal head 6. For this control, the signal from multi-level dot pattern table 3 is used.

Driver circuit 5 is an IC circuit including shift register, latch circuit, gates and driver (which are not shown) and mounted on the board of thermal head 6. The cooperation of drive circuit 5 and thermal printing controller 4 is used for compensating for the heat accumulation in the conventional thermal printing device of the ink melting type. In this embodiment, it is used for the energy control for the expression of gradation.

When the thermal printer with such an arrangement is used for printing based on dot matrix, as discussed above in detail, the energy-concentrated dots are not aligned in the vertical scanning direction. The image obtained has a high quality and is free from unpleasant texture noise. Additionally, since the energyconcentrated dots are distributed in different vertical scanning rows, the number of times that current is fed to specific heating resistors is reduced ; thus, the life of the thermal head is lengthened.

Another embodiment of this invention will be described. As recalled, the first embodiment employs the quasi-diamond-shaped matrix for the dot matrix making up the picture element. The same effects can be obtained with a rectangular or square dot matrix, if the picture elements are appropriately arrayed. An example of such possible picture element arrays is illustrated in Fig. 7. In this instance, each picture element consists of a square matrix of 3 × 3. In this picture element array, the picture element matrices are not aligned in a line vertically and horizontally. In the two adjacent, upper and lower rows of picture elements, the low row is staggered from the upper row by shifting the row either one dot to the left or 2 dots to the right. For this reason, the energy concentrated dots are never vertically aligned. Fig. 7 shows an array of printing dots using the dot patterns each having the printing dot at the center of the 3 × 3 dot matrix. From this picture element array, it can be seen that the same effects as those of the first embodiment can be attained.

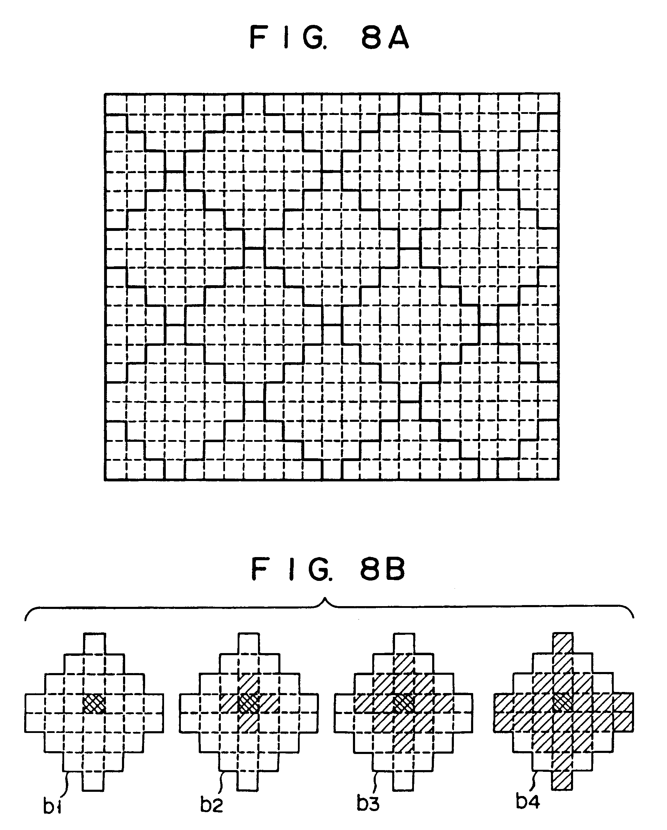

Fig. 8 shows an array of picture elements according to a third embodiment of this invention. In this embodiment, the picture element is composed of a quasidiamond-shaped matrix of 4√2 × 4√2 which is larger than that of the first embodiment. In this case also, each horizontal picture element row is staggered by one-half picture element from the adjacent row. Dot patterns b1 to b4 as shown in Fig. 8B are assigned to the different density levels.

Dot pattern b1 contains one printing dot at the center of the matrix. Dot pattern b2 has four dots on the top, bottom, left and right of this center dot. Dot pattern b3 uses eight additional dots around the circumference of the five dots of pattern b2, for a total of thirteen dots. Dot pattern b4 uses additional dots around the thirteen dots of pattern b3, for a total of 24 dots. Even with these dot patterns, the same effects as those of the first embodiment can be obtained.

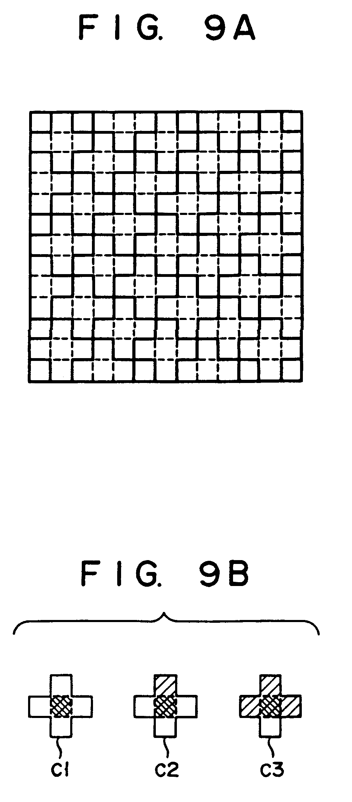

Fig. 9A shows an array of picture elements according to a fourth embodiment of this invention. In this embodiment, a cross-like dot matrix of five dots makes up one picture element. The picture elements are not aligned successively in the horizontal and vertical directions, but are arrayed in the diagonal directions. The dot patterns as shown in Fig. 9B are assigned to different density levels.

Dot pattern c1 contains one printing dot at the center. Dot pattern c2 uses one dot above the center dot of dot pattern c1, for a total of two dots. Dot pattern c3 contains printing dots at other locations than that below the center dot. Also in this embodiment, in the two adjacent dot rows including the energy-concentrated dots, the energy-concentrated dots are not aligned vertically, thus preventing generation of the lattice-like texture noise.

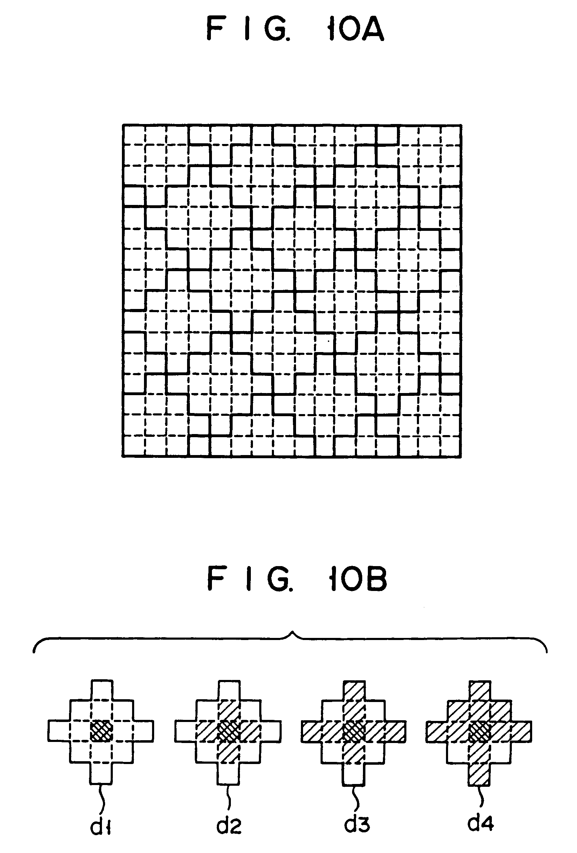

Fig. 10A shows an array of picture elements according to a fifth embodiment of this invention. A quasidiamond-like matrix of 13 dots makes up a picture element. As in the fourth embodiment, the picture elements are not aligned vertically and horizontally, but arrayed in the diagonal directions. Dot patterns d1 to d4, as shown in Fig. 10B, are assigned to different density levels, respectively.

Dot pattern d1 contains one printing dot at the center of the dot matrix. Dot pattern d2 is a cross-like dot pattern in which additional four dots are arrayed around the center dot of dot pattern d1. Dot pattern d3 adds three dots to the top, right and left of the dot pattern d3, for a total of eight dots. Dot pattern d4 is a dot pattern in which three additional dots are applied to the dot pattern d3, for a total of eleven dots. The same effects as those of the fourth embodiment are attainable.

In an exemplary modification, the picture elements and the dot patterns may be arrayed, rotated by 90°, 180° and 270°. The pattern size may be increased. Additionally, this invention is applicable not only for a thermal transfer printer of the ink melting-type, but also for a thermal transfer printer of the ink subliming-type, a thermal printer using a thermo-sensitive paper, an ink jet printer, or an electrophotography printer of digital type.

## Claims

1. A halftone image printing device in which one image is made up of a number of picture elements, each picture element including a predetermined number of dots combined into a specific matrix array, each picture element is printed in a dot pattern consisting of specific dots of those in the dot matrix, and a dot pattern and an amount of energy to print a dot or dots of the dot pattern are controlled according to optical density levels of the picture element, characterized in having one dot row which contains at least one energy-concentrated dot, said at least one energy-concentrated dot being arranged to be supplied with concentrated printing energy but not a lower energy and two dot rows which are adjacent to that energy-concentrated dot-containing row, both also containing energy concentrated dots arranged only to be applied with concentrated printing energy, the energy-concentrated dots of said respective rows being arrayed in different dot columns, wherein dots of the dot pattern other than the energy-concentrated dots are arranged only to be applied with lower printing energy.

2. A halftone image printing device according to claim 1, characterized in that the dot patterns for all density levels which contain an energy-concentrated dot are formed so that the energy-concentrated dot is located at a fixed position in the dot matrix of the picture element.

3. A halftone image printing device according to claim 1 or 2, characterized in that each of said picture elements is composed of a quasi-diamond-shaped dot matrix, and said quasi-diamond-shaped matrices are arrayed horizontally and vertically, and said quasi-diamond-shaped dot matrices in one row are staggered by one-half picture element from those matrices on the adjacent rows.

4. A halftone image printing device according to claim 1 or 2, characterized in that each of said picture elements is composed of a cross-shaped dot matrix, and said cross-shaped dot matrices are arrayed in an oblique direction, between horizontal and vertical directions.

5. A halftone image printing device according to claim 1 or 2, characterized in that each of said picture elements is composed of a rectangular dot matrix, said rectangular dot matrices are arrayed horizontally and vertically, and said rectangular dot matrices in one row are staggered from those in the adjacent rows by a predetermined number of dots corresponding to one-half picture element.

6. A halftone image printing device according to claim 5, characterized in that each of said picture elements is composed of a square dot matrix.

7. A halftone image printing device according to one of claims 1 to 6, characterized in that, in the low optical density region, said dot pattern is composed of a single dot located at the center of said dot matrix, in the medium optical density region, said dot pattern contains additional dots arrayed extending from said single center dot in the row or column directions, and in the high optical density region, said dot pattern contains additional dots arrayed extending from said single center dot in the row and column directions.

## Patentansprüche

1. Druckeinrichtung für Halbtonbilder, in der ein Bild aus einer Anzahl von Bildelementen zusammengesetzt wird, wobei jedes Bildelement eine vorbestimmte Anzahl von zu einer spezifischen Matrix-Anordnung kombinierten Bildpunkten enthält, wobei jedes Bildelement als ein aus spezifischen Bildpunkten aus der Bildpunkt-Matrix bestehendes Bildpunktmuster gedruckt wird, und wobei ein Bildpunktmuster und ein Energiebetrag zum Drucken eines Bildpunktes oder von Bildpunkten gemäß optischen Dichtepegeln des Bildelementes gesteuert werden,
gekennzeichnet durch
eine Bildpunktzeile, die wenigstens einen energiekonzentrierten Bildpunkt enthält, wobei der wenigsten eine energiekonzentrierte Bildpunkt angeordnet ist, um mit konzentrierter Druckenergie, jedoch nicht einer niedrigeren Energie versorgt zu sein, und durch zwei Bildpunktzeilen, die zu der Zeile, die den energiekonzentrierten Bildpunkt beinhaltet, benachbart sind, wobei beide auch energiekonzentrierte Bildpunkte enthalten, die angeordnet sind, um nur mit konzentrierter Druckenergie versorgt zu sein, wobei die energiekonzentrierten Bildpunkte der entsprechenden Zeilen in verschiedenen Bildpunktspalten angeordnet sind, und wobei Bildpunkte der Bildpunktmuster außer den energiekonzentrierten Bildpunkten angeordnet sind, um nur mit niedrigerer Druckenergie beaufschlagt zu sein.

2. Druckeinrichtung für Halbtonbilder nach Anspruch 1, dadurch gekennzeichnet, daß die Bildpunktmuster für alle Dichtepegel, die einen energiekonzentrierten Bildpunkt enthalten, so gebildet sind, daß der energiekonzentrierte Bildpunkt an einer festen Position in der Bildpunkt-Matrix des Bildelements lokalisiert ist.

3. Druckeinrichtung für Halbtonbilder nach Anspruch 1 oder 2, dadurch gekennzeichnet, daß jedes der Bildelemente aus einer quasi-rautenförmigen Bildpunktmatrix aufgebaut ist, und daß die quasi-rautenförmigen Matrizen horizontal und vertikal aufgereiht sind, und daß die quasi-rautenförmigen Bildpunkt-Matrizen in einer Zeile um ein halbes Bildelement zu den Bildelementen von den Matrizen auf den angrenzenden Zeilen versetzt sind.

4. Druckeinrichtung für Halbtonbilder nach Anspruch 1 oder 2, dadurch gekennzeichnet, daß jedes der Bildelemente aus einer kreuzförmigen Bildpunkt-Matrix zusammengesetzt ist, und daß die kreuzförmigen Bildpunkt-Matrizen in einer Schrägrichtung zwischen horizontalen und vertikalen Richtungen aufgereiht sind.

5. Druckeinrichtung für Halbtonbilder nach Anspruch 1 oder 2, dadurch gekennzeichnet, daß jedes der Bildelemente aus einer rechteckigen Bildpunktmatrix aufgebaut ist, wobei die rechteckigen Bildpunktmatrizen horizontal und vertikal aufgereiht sind, und wobei die rechteckigen Bildpunkt-Matrizen in einer Zeile denjenigen in benachbarten Zeilen um eine vorbestimmte Anzahl von Bildpunkten entsprechend einem halben Bildelement versetzt sind.

6. Druckeinrichtung für Halbtonbilder nach Anspruch 5, dadurch gekennzeichnet, daß jedes der Bildelemente aus einer quadratischen Bildpunkt-Matrix aufgebaut ist.

7. Druckeinrichtung für Halbtonbilder nach einem der Ansprüche 1 bis 6, dadurch gekennzeichnet, daß das Bildpunktmuster in dem Bereich mit niedriger optischer Dichte aus einem einzelnen, am Zentrum der Bildpunkt-Matrix gelegenen Bildpunkt zusammengesetzt ist, das Bildpunktmuster in dem Bereich mit mittlerer optischer Dichte zusätzliche, in den Zeilen- oder Spaltenrichtungen sich von dem einzelnen Zentrums-Bildpunkt aus erstreckende Bildpunkte enthält, und das Bildpunktmuster in dem Bereich mit hoher optischer Dichte zusätzliche, in den Zeilen- und Spaltenrichtungen sich von dem einzelnen Zentrums-Bildpunkt aus erstreckende Bildpunkte enthält.

## Revendications

1. Dispositif d'impression d'images tramées, dans lequel une image est formée d'un certain nombre d'éléments d'image, chaque élément d'image comprenant un nombre prédéterminé de points combinés sous forme d'un arrangement particulier de matrice, chaque élément d'image est imprimé sous forme d'un motif de points constitué de points particuliers parmi ceux de la matrice de points, et un motif de points et une quantité d'énergie destinés à l'impression d'un point ou de plusieurs points du motif de points sont réglés en fonction des niveaux de densité optique de l'élément d'image, caractérisé par la présence d'une ligne de points qui contient au moins un point de concentration d'énergie, ce point de concentration d'énergie au moins étant disposé afin qu'il reçoive de l'énergie concentrée d'impression mais non une énergie plus faible, et deux lignes de points qui sont adjacentes à la ligne contenant le point de concentration d'énergie, mais contenant aussi des points de concentration d'énergie disposés afin que seule de l'énergie d'impression concentrée leur soit appliquée, les points de concentration d'énergie des lignes respectives étant disposés avec un arrangement couvrant différentes colonnes de points, dans lequel les points du motif de points autres que les points de concentration d'énergie sont disposés afin que seule une énergie inférieure d'impression leur soit appliquée.

2. Dispositif d'impression d'images tramées selon la revendication 1, caractérisé en ce que les motifs de points, pour tous les niveaux d'énergie qui contiennent un point de concentration d'énergie, sont formés de manière que le point de concentration d'énergie se trouve en position fixe dans la matrice de points de l'élément d'image.

3. Dispositif d'impression d'images tramées selon la revendication 1 ou 2, caractérisé en ce que chacun des éléments d'image est composé d'une matrice de points en forme de quasi-losange, et les matrices en forme de quasi-losange sont disposées horizontalement et verticalement, et les matrices de points en forme de quasi-losange d'une ligne sont décalées d'un demi-élément d'image par rapport aux matrices des lignes adjacentes.

4. Dispositif d'impression d'images tramées selon la revendication 1 ou 2, caractérisé en ce que chacun des éléments d'image est composé d'une matrice de points en forme de croix, et les matrices de points en forme de croix sont disposées en oblique, entre des directions horizontale et verticale.

5. Dispositif d'impression d'images tramées selon la revendication 1 ou 2, caractérisé en ce que chacun des éléments d'image est composé d'une matrice rectangulaire de points, les matrices rectangulaires de points sont disposées horizontalement et verticalement, et les matrices rectangulaires de points d'une ligne sont décalées par rapport à celles des lignes adjacentes d'un nombre prédéterminé de points correspondant à un demi-élément d'image.

6. Dispositif d'impression d'images tramées selon la revendication 5, caractérisé en ce que chacun des éléments d'image est composé d'une matrice carrée de points.

7. Dispositif d'impression d'images tramées selon l'une quelconque des revendications 1 à 6, caractérisé en ce que, dans la région de faible densité optique, le motif de points est composé d'un seul point placé au centre de la matrice de points, dans la région des densités optiques moyennes, le motif de points contient des points supplémentaires disposés dans les directions de lignes ou de colonnes à partir du point central unique, et, dans la région des densités optiques élevées, le motif de points contient des points supplémentaires disposés en direction des lignes et des colonnes à partir du point central unique.
